# EUROPEAN PATENT SPECIFICATION

(11) **EP 1 879 337 B1**
(45) Date of publication and mention of the grant of the patent: **29.08.2012**
(21) Application number: 06805004.6
(22) Date of filing: 20.10.2006
(51) Int. Cl.: H04L 12/56, H04L 29/06, H04M 7/00

(54) **A METHOD FOR PROCESSING THE REGISTER MESSAGE IN THE IMS NETWORK ACCORDING TO THE INITIAL FILTERING RULES**
EIN VERFAHREN ZUR VERARBEITUNG VON EINSCHREIBEMELDUNGEN IN DAS IMS-NETZWERK ENTSPRECHEND DER URSPRÜNGLICHEN FILTERREGELN
PROCEDE DE TRAITEMENT DE MESSAGE D INSCRIPTION DANS LE RESEAU IMS SELON LES REGLES DE FILTRAGE INITIALES

(30) Priority: 21.10.2005 CN 200510109519; 13.01.2006 CN 200610006544
(43) Date of publication of application: 16.01.2008
(73) Proprietor: Huawei Technologies Co., Ltd., Longgang District, Shenzhen Guangdong 518129 (CN)
(72) Inventor: LI, Hui, Guangdong Province Shenzhen 518129 (CN); ZHU, Fenqin, Guangdong Province Shenzhen 518129 (CN)
(74) Representative: Pfenning, Meinig & Partner GbR
(86) International application number: PCT/CN2006/002794
(87) International publication number: WO 2007/045182

(56) References cited:
- CN-A- 1 642 346
- KR-A- 20040 057 858
- US-A1- 2004 184 452
- US-A1- 2005 202 819
- "Digital cellular telecommunications system (Phase 2+); Universal Mobile Telecommunications System (UMTS); IP Multimedia (IM) session handling; IM call model; Stage 2 (3GPP TS 23.218 version 6.3.0 Release 6); ETSI TS 123 218" ETSI STANDARDS, LIS, SOPHIA ANTIPOLIS CEDEX, FRANCE, vol. 3-CN1, no. V6.3.0, 1 March 2005 (2005-03-01), XP014027527 ISSN: 0000-0001
- "Digital cellular telecommunications system (Phase 2+); Universal Mobile Telecommunications System (UMTS); IP Multimedia (IM) Subsystem Cx and Dx Interfaces; Signalling flows and message contents (3GPP TS 29.228 version 6.8.0 Release 6); ETSI TS 129 228" ETSI STANDARDS, LIS, SOPHIA ANTIPOLIS CEDEX, FRANCE, vol. 3-CN4, no. V6.8.0, 1 September 2005 (2005-09-01), XP014031985 ISSN: 0000-0001

## Description

### Field of the Invention

The present invention relates to the field of communications, and in particular to a method of processing a registration message according to initial filter criteria in an Internet Protocol Multimedia Subsystem (IMS) network.

### Background of the Invention

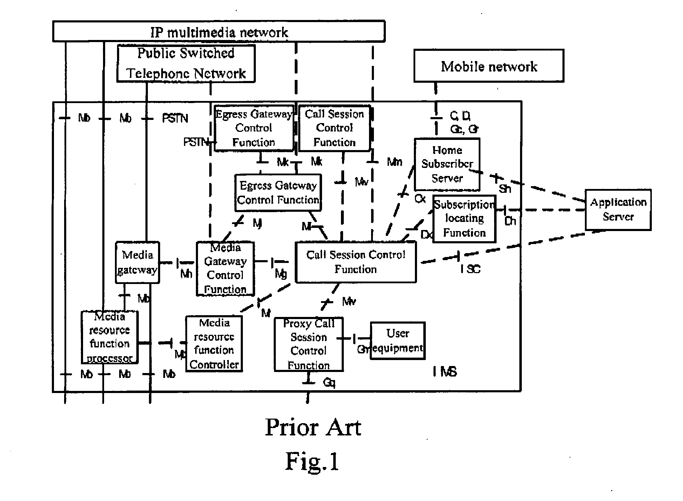

The IMS is a subsystem superimposed on the packet network by the 3GPP. The IMS adopts packet switched domain as its bearer channel to control signaling and media transmission and takes Session Initiation Protocol (SIP) as the service control protocol. The IMS provides abundant multimedia services through separating service control from bearer control utilizing characteristics of simpleness, easy extension and the convenience of media combination of the SIP. The IMS include Call Session Control Function (CSCF) for providing functions of controlling user's registration, controlling session, etc., Home Subscriber Server (HSS) for centralizing management of user subscription data and Application Sever (AS) for providing function of logic control to all kinds of services. The architecture of the IMS is illustrated in Figure 1.

In an application of the IMS, a Public User Identity and a Private User Identity are defined by the 3GPP in order to implement registrations of terminals and the calling or called services. The Public User Identity is used in communication and the Private User Identity is used in authentication for users.

A registration procedure prescribed in the SIP protocol is used in the IMS network to implement the process that a user accesses the IMS network. In the registration process, a User Equipment (UE) is authorized by the IMS network and a safe channel is established between the UE and a Proxy-Call Session Control Function (P-CSCF). When the authorization for the user is successful, a Serving Call Session Control Function (S-CSCF) shall download the user's subscription data from the HSS.

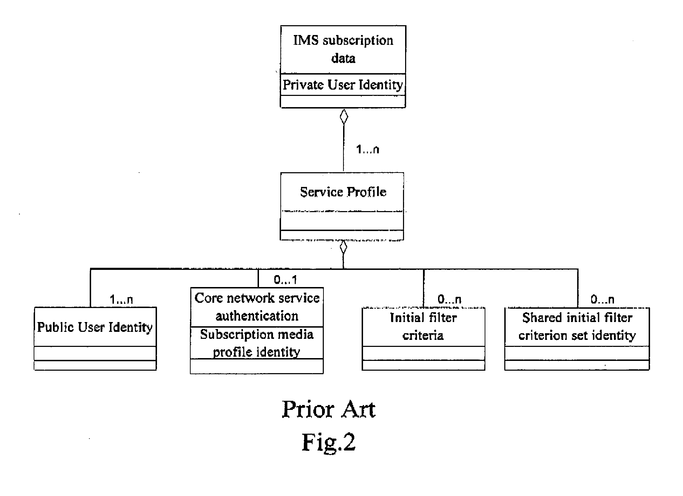

The structure of a user's subscription data downloaded by the S-CSCF when a Unified Modeling Language (UML) model is utilized is illustrated in Figure 2.

The IMS subscription data downloaded by the S-CSCF may include at least one Service Profile containing information such as the Public User Identity, Core Network Service Authorization, initial Filter Criterion (iFC) Set and Shared iFC Set. An initial filter criterion is indicated as service parameters of a group of users and a Service Profile can contain zero or several instances of initial filter criteria.

An initial filter criterion includes: the description of an application server (AS), the priority of the initial filter criterion, and a trigger point. The description of the application server (AS) includes the application server name, the default handling, and the optional service information. According to these parameters, the S-CSCF matches trigger information in a trigger point with the request message received from an Mw interface in an order from the highest to the lowest priority of the initial filter criteria. If the matching is successful, the S-CSCF sends, via the Internal Service Control (ISC) interface, the relevant request to the AS matching the initial filter criteria.

If the received is a registration message, the S-CSCF sends a third-party registration message to each AS matching the initial filter criteria; if the received is a request of other types, the S-CSCF adds a specific identity and routing information in the message sent to the AS matching the initial filter criteria. After processing the service logic, the AS returns the request message to the S-CSCF based on the routing information. The S-CSCF continues to perform the matching for the initial filter criteria with lower priorities until the checking for all of the initial filter criteria in the Service Profile is finished.

If a plurality of Public User Identities are contained in the IMS subscription data downloaded by the S-CSCF, it indicates that all of the Public User Identities in this subscription data belong to the same implicit registration set. The meaning of the implicit registration set is that if one of the Public User Identities in an implicit registration set is registered (or deregistered), all of the Public User Identities in the implicit registration set are registered (or deregistered).

If the matching of registration request message is successful, the S-CSCF performs a third party registration for the application server described in the criteria. In the third party registration message initiated by the S-CSCF, the Public User Identity may be one selected from the Public User Identities in the implicit registration set based on the local policy. Only one Public User Identity can be carried in the third party registration message, so if the AS needs to obtain the registration state of other Public User Identities, it can obtain the registration state of other Public User Identities from the S-CSCF by subscription.

If the third party registration is unsuccessful, the S-CSCF will continue to perform the matching or initiate a network deregistration procedure to the subscriber according to the "default handling" indication in the initial filter criteria.

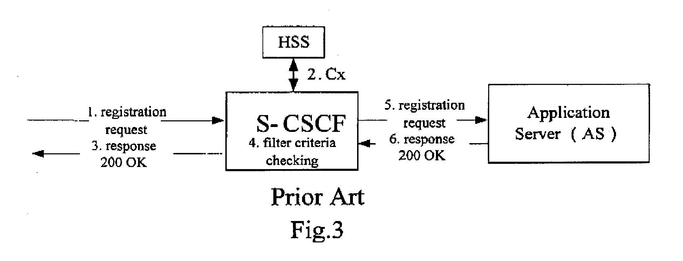

In the prior art, the S-CSCF downloads the subscription data after the registration authentication is successful for a user. If the user is an implicit registration subscriber, the subscription data may include a plurality of Service Profiles. When the subscription data is stored locally at the S-CSCF, the S-CSCF matches the initial filter criteria with the registration request message according to the priority of initial filter criteria described in the Service Profile. If the matching is successful, the S-CSCF will initiate a third party registration and the AS of the third party registration is an application server designated in the matched initial filter criteria. If there are a plurality of matched initial filter criteria, the S-CSCF will initiate a third party registration to the corresponding application server accordingly, and the procedure of the third party registration is illustrated in Figure 3.

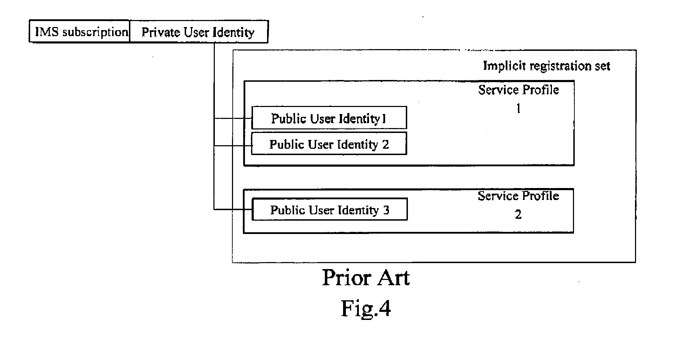

The subscription data of an IMS user is illustrated in Figure 4, three Public User Identities constitute an implicit registration set and the three Public User Identities correspond to two Service Profiles, wherein the Public User Identity 1 and the Public User Identity 2 correspond to the Service Profile 1 and the Public User Identity 3 corresponds to the Service Profile 2.

If the Public User Identity 1 is used by an IMS terminal to initiate a registration and the registration is successful, the S-CSCF processes the third party registration according to the initial filter criteria in the Service Profile. Because the prior art does not indicate that the S-CSCF needs to check the initial filter criteria information in different Service Profiles, upon receiving a registration message, the S-CSCF will only check initial filter criteria in the Service Profile corresponding to Public User Identity 1, and perform matching for these initial filter criteria one by one according to priorities of the initial filter criteria and trigger the corresponding AS. If the two Service Profiles include both initial filter criteria concerning registration message processing and initial filter criteria concerning non-registration message processing, only the initial filter criteria concerning registration message processing in the Service Profile I will be triggered according to the above processing mode, and only the AS in the Service Profile 1 will be registered by the third party.

According to the definition of an implicit registration set, the registration of Public User Identity 3 has been successfully performed, but the initial filter criteria concerning registration message processing in Service Profile 2 corresponding to Public User Identity 3 is not checked, which results in that the Service Profile 2 corresponding to Public User Identity 3 is not processed in the above processing procedure, and the relevant AS can not be involved in the third party registration. But in fact, the Public User Identity 3 has been registered at this time, which may result in that the AS needing to learn about the Public User Identity in Service Profile 2 can not be notified.

"Digital cellular telecommunications system (Phase 2+); Universal Mobile Telecommunications System (UMTS); IP Multimedia (IM) session handling; IM call model; Stage 2 (3GPP TS 23.218 version 6.3.0 Release 6); ETSI TS 123 218" ETSI STANDARDS, LIS, SOPHIA ATIPOLIS CEDEX, FRANCE, vol. 3-uni, no. V6.3.0, 1 March 2005 (2005-03-01), specifies the IP Multimedia (IM) Call Model for handling of an IP multimedia session origination and termination for an IP Multimedia subscriber.

"Digital cellular telecommunications system (Phase 2+); Universal Mobile Telecommunications System (UMTS); IP Multimedia (IM) Subsystem Cx and Dx Interfaces; Signalling flows and message contents (3GPP TS 29.228 version 6.8.0 Release 6); ETSI TS 129 228" ETSI STANDARDS, LIS, SOPHIA ANTIPOLIS CEDEX, FRANCE, vol. 3-CN4, no. V6.8.0, 1 September 2005 (2005-09-01), specifies
1. The interactions between the HSS (Home Subscriber Server) and the CSCF (Call Session Control Functions), referred to as the Cx interface.
2. The interactions between the CSCF and the SLF (Server Locator Function), referred to as the Dx interface.

### Summary of the Invention

The present invention provides a method of processing a registration message according to initial filter criteria in an IMS network so that the initial filter criteria concerning registration in the Service Profiles corresponding to all the Public User Identities in the implicit registration set can be processed after a user has been successfully registered.

The present invention provides the following technical solutions.

A method of processing a registration message according to initial filter criteria in an IMS network, includes: downloading, by a Serving Call Session Control Function (S-CSCF), subscription data for a user from a Home Subscriber Server (HSS) after a registration of a user's Public User Identity carried in the registration message is successful, wherein the subscription data includes an implicit registration set corresponding to the user; wherein the implicit registration set comprising all implicitly registered Public User Identities associated with the registered Public User Identity, and when one of the Public User Identities in the implicit registration set is registered, all Public User Identities in the implicit registration set are implicitly registered; wherein each of the Public User Identities in the implicit registration set corresponds to a Service Profile; traversing, by the S-CSCF, all Service Profiles corresponding to all the implicitly registered Public User Identities associated with the registered Public User Identity, matching the registration message with the initial filter criteria in all the Service Profiles corresponding to all the implicitly registered Public User Identities and sending a request message to corresponding application servers (AS) to perform a third party registration when the matching is successful.

When performing the third party registration, a registered Public User Identity in the request message is an unbarred Public User Identity in the implicit registration set or a Public User Identity selected based on a local policy.

A registered Public User Identity in the request message for the third party registration has a format of SIP URI, or when the format of the registered Public User Identity is Tel URI, the format of Tel URI is transformed to the format of SIP URI.

When a Service Profile includes a plurality of Public User Identities, each of the Public User Identities in the Service Profile replaces in turn a Public User Identity in the registration message and then the registration message is matched with each of the initial filter criteria.

The registration message is matched with the initial filter criteria in an order from the highest to the lowest priority.

In a process of processing the third party registration, upon receiving a failure response message returned by a triggered AS, the S-CSCF stops processing subsequent initial filter criteria and initiates a network deregistration procedure, or the S-CSCF further determines default handling data of the initial filter criteria, if the default handling data indicates continuing or there is no default handling data in the initial filter criteria, the S-CSCF continues with the subsequent processing, if the default handling data indicates terminating, the S-CSCF stops processing the subsequent initial filter criteria and initiates the network deregistration procedure.

When a deregistration message initiated by a user is received by the S-CSCF, the S-CSCF traverses all the Service Profiles in the subscription data, matches the deregistration message with the initial filter criteria in all the Service Profiles, and sends a request message to corresponding application servers (AS) to perform a third party deregistration when the matching is successful.

When a deregistration message from a network is received by the S-CSCF, the S-CSCF traverses all the Service Profiles in the subscription data, matches the deregistration message with the initial filter criteria in all the Service Profiles, and sends a request message to corresponding application servers (AS) to perform a third party deregistration when the matching is successful.

A method of processing a registration message according to initial filter criteria in an IMS network, includes: downloading, by a Serving Call Session Control Function (S-CSCF), subscription data for a user from a Home Subscriber Server (HSS) after a registration of a user's Public User Identity carried in the registration message is successful, wherein the subscription data comprises an implicit registration set corresponding to the user; wherein the implicit registration set comprising all implicitly registered Public User Identities associated with the registered Public User Identity, and when one of the Public User Identities in the implicit registration set is registered, all Public User Identities in the implicit registration set are implicitly registered; wherein each of the Public User Identities in the implicit registration set corresponds to a Service Profile; all initial filter criteria of the implicit registration set are inserted in each of Service Profiles in the implicit registration set; selecting, by the S-CSCF, a Service Profile corresponding to the user's Public User Identity used in the registration message, matching the registration message with all the initial filter criteria in the selected Service Profile, and sending a request message to corresponding Application Servers (AS) to perform a third party registration when the matching is successful.

There are some beneficial effects according to the present invention as follows.

1. According to the invention, after a registration of a Public User Identity is successful, the Service Profiles corresponding to all the Public User Identities in an implicit registration set are traversed, then the registration message is matched with the initial filter criteria respectively, and when the matching is successful, a third party registration is performed, which enables an application server to learn about the registration state of a Public User Identity registered implicitly.

2. Through carrying all the Public User Identities in the Service Profiles or all the Public User Identities in the subscription data in a request message for the third party registration, all of the User Identities in the implicit registration set can be obtained by the AS by just sending one request message for the third party registration; in addition, if the AS does not support the third party registration, the User Identities in the implicit registration set can also be carried to the AS through other request messages.

3. The initial filter criteria data for the third party registration and the initial filter criteria data for the service are integrated according to the present invention so that it is convenient to configure the user's subscription data, and when checking according to the initial filter criteria, it is very fast and convenient by directly checking the extended indication.

### Brief Description of the Drawings

Figure 1 is a schematic diagram illustrating the architecture of an IMS network in the prior art;

Figure 2 is a schematic diagram illustrating the structure of a user's subscription data in the prior art;

Figure 3 is a flow chart illustrating a third party registration procedure in the prior art;

Figure 4 is a schematic diagram illustrating a relationship between Public User Identities and Service Profiles in an implicit registration set in the prior art;

Figure 5 is a flow chart illustrating the implementation of a third party registration according to the first embodiment of the invention;

Figure 6 is a flow chart illustrating the implementation of a third party registration according to the second embodiment of the invention;

Figure 7 is a schematic diagram illustrating a relationship between a shared filter criterion set and Public User Identities according to the third embodiment of the invention;

Figure 8 is a flow chart illustrating the implementation of a third party registration according to the third embodiment of the invention;

Figure 9 is a flow chart illustrating the implementation of a third party registration according to the fourth embodiment of the invention.

### Detailed Description of the Embodiments

When the registration of a user's Public User Identity is successful, in order that initial filter criteria in the Service Profiles (or referred to as Service Profile data) corresponding to all Public User Identities registered implicitly in an implicit registration set can be processed and corresponding application servers can acquire the registration state of a Public User Identity in time, in the present invention, the S-CSCF traverses the initial filter criteria defined by the Service Profiles in an implicit registration set corresponding to a registered Public User Identity and matches registration messages with initial filter criteria. When the matching is successful, the S-CSCF sends a registration message to the corresponding Application Server (AS) to perform a third party registration.

The S-CSCF can use the following methods to process the filter criteria.

(1) Based on the existing structure of subscription data, the S-CSCF can traverse and process the initial filter criteria defined by Service Profiles in an implicit registration set.

(2) All initial filter criteria related to registration are inserted in each of the Serviced Profiles in an implicit registration set such that all the initial filter criteria of registration messages can be processed through processing one of the Service Profiles.

(3) Initial filter criteria related to registration defined by Service Profiles in an implicit registration set are integrated into a shared initial filter criterion set, and all initial filter criteria of registration messages are processed through referring to the shared initial filter criterion set.

(4) When a request of third party registration is initiated by the S-CSCF, all of the Public User Identities contained in the implicit registration set can be carried in the request message (for example, an extended registration message which uses header field of the P-Associated-URI). For an AS which does not need to perform a third party registration, after the S-CSCF matches a request of an un-third party registration with the initial filter criteria, all of the Public User Identities contained in the implicit registration set can be carried in the request message (for example, an extended SIP message which uses header field of the P-Associated-URI) forwarded to the AS.

Because what is carried in a registration message is a registered Public User Identity, when a registration message is being matched with initial filter criteria in the Service Profiles corresponding to other Public User Identities, the Public User Identity in the registration message is firstly replaced with the Public User Identity corresponding to the Service Profile data and then the matching is executed.

Upon performing a third party registration, the registered Public User Identity in the request message of a third party registration may be a Public User Identity contained in the registration message which is successfully matched with the initial filter criteria, or an unbarred Public User Identity selected from the implicit registration set, or a Public User Identity selected according to a local policy.

The Public User Identity in a request message of a third party registration is a public identity with the format of SIP URI. If the format of a Public User Identity is Tel URI, then the format of Tel URI will be transformed into the format of SIP URI and then be carried in the request message of the third party registration.

The description will be given in detail in accordance with the appended figures as follows:

### The first embodiment

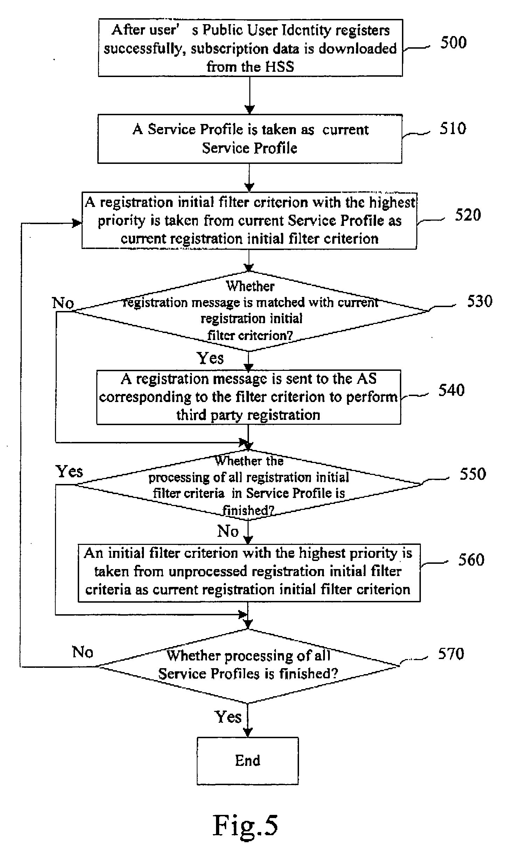

When a user having implicit registration service makes subscription, the subscription is performed based on the existing standard processing method. As illustrated in Figure 5, the S-CSCF processes the initial filter criteria with the following blocks.

Block 500: A Public User Identity is used by a user for registration. After the registration is successfully authenticated by the S-CSCF, the S-CSCF downloads the subscription data from the HSS, and an implicit registration set corresponding to the user is contained in the subscription data.

For a user having implicit registration service, the implicit registration set includes all implicitly registered Public User Identities associated with the registered Public User Identity and the downloaded subscription data may contain a plurality of Service Profiles.

Block 510: One of the Service Profiles is taken from the subscription data as the current Service Profile.

The order of Service Profiles is determined based on the downloading order or other orders. The S-CSCF considers that there is no priority relationship among initial filter criteria of different Service Profiles.

Block 520: An initial filter criterion with the highest priority is taken from the current Service Profile as the current initial filter criterion.

Block 530: The registration message is matched with the current initial filter criterion; if the matching is successful, block 540 will be executed, otherwise, block 550 will be executed.

Block 540: The S-CSCF sends a registration message to the AS corresponding to the initial filter criterion via the ISC interface to perform a third party registration.

Block 550: Determine whether processing for all the initial filter criteria in the Service Profile is finished. If the processing is finished, block 570 will be executed, otherwise, block 560 will be executed.

Block 560: An initial filter criterion with the highest priority is taken from the unprocessed initial filter criteria as the current initial filter criterion.

Block 570: Determine whether processing for all the Service Profiles in the subscription data is finished. If the processing is finished, the procedure will be terminated, otherwise, the next Service Profile will be taken as the current Service Profile and block 520 will be executed.

In block 530, when a Service Profile contains a plurality of Public User Identities, each of the Public User Identities contained in the Service Profile replaces in turn the corresponding Public User Identity in the registration message and then the registration message is matched with each of the filter criteria.

In the above procedure, when the S-CSCF processes the third party registration, if a failure response is returned by the triggered AS, the S-CSCF stops processing subsequent initial filter criteria and initiates a network deregistration procedure, or alternatively, the S-CSCF further determines the default handling configuration data of the initial filter criterion and does the following processing based on the determined result:

(1) If the default handling configuration data of an initial filter criterion is a continuity indicator (such as Session-Continued) or the default handling data was not configured for the initial filter criterion, the S-CSCF continues with the subsequent processing, which involves continuously processing the filter criteria with lower priorities in the same Service Profile and the filter criteria in other unprocessed Service Profiles.

(2) If the default handling configuration data of an initial filter criterion is a termination indicator (such as Session-Terminated), the S-CSCF stops subsequent processing of initial filter criteria and initiates a network deregistration procedure.

The failure response message returned from the AS is: failing to contact with the AS, 408 request timeout, or 5xx server error.

When a deregistration message initiated by a user is received by the S-CSCF, the S-CSCF refers to a shared filter criterion set base on the identity and matches the deregistration message with the filter criteria in the shared filter criterion set. When the matching is successful, the S-CSCF sends a deregistration message to the corresponding application server (AS) to perform a third party deregistration. When a deregistration request sent from network is received by the S-CSCF, the S-CSCF refers to the shared filter criterion set base on the identity and matches the corresponding deregistration message with the filter criteria in the shared filter criterion set. When the matching is successful, the S-CSCF sends a deregistration message to the corresponding application server (AS) to perform the third party deregistration.

An example is as follows. A user registers by using the Public User Identity 1. After the registration is successfully authenticated by the S-CSCF, the S-CSCF downloads the subscription data as illustrated in Figure 4 from the HSS. The S-CSCF firstly checks the initial filter criteria in the Service Profile 1. In an order from the highest to the lowest priority, the S-CSCF checks in turn whether there is any initial filter criterion which matches with the registration message. If the matching is successful, the S-CSCF sends a third party registration message to each AS matched with the initial filter criterion via the ISC interface. When the checking of Service Profile 1 by the S-CSCF is finished, the S-CSCF subsequently checks the initial filter criteria in the Service Profile 2 in the same way. When the checking of Service Profile 2 by the S-CSCF is finished, the checking of subscription data related to the third party registration is terminated.

### The second embodiment

A method of inserting all initial filter criteria of the registration messages in each Service Profile corresponding to an implicit registration set is adopted according to the embodiment of the invention. When a user having implicit registration service makes subscription, all initial filter criteria of the registration messages in an implicit registration set are collected and inserted in initial filter criteria of each of corresponding Service Profiles in the implicit registration set. According to service processing requirement of the AS, priorities are set for all the initial filter criteria in each Service Profile.

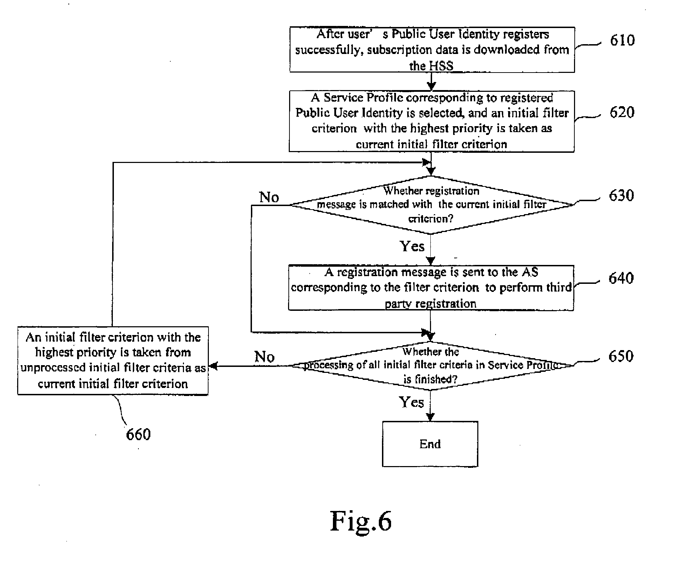

Referring to Figure 6, the S-CSCF processes initial filter criteria according to the following blocks.

Block 610: A Public User Identity is used by a user for registration. After the registration is successfully authenticated by the S-CSCF, the S-CSCF downloads the subscription data from the HSS, and an implicit registration set corresponding to the user is contained in the subscription data.

For a user having implicit registration service, the implicit registration set includes all implicitly registered Public User Identities associated with the registered Public User Identity and the downloaded subscription data may contain a plurality of Service Profiles.

Block 620: A Service Profile corresponding to the registered Public User Identity is selected by the S-CSCF and an initial filter criterion with the highest priority is taken from the Service Profile as the current initial filter criterion.

Block 630: The registration message is matched with the current initial filter criterion and, if the matching is successful, block 640 will be executed, otherwise, block 650 will be executed.

Block 640: The S-CSCF sends a registration message to the AS corresponding to the initial filter criterion via the ISC interface to perform the third party registration.

Block 650: Determine whether processing for all the initial filter criteria in the Service Profile is finished. If the processing is finished, the S-CSCF ceases processing other Service Profiles and terminates the processing procedure, otherwise, block 660 will be executed.

Block 660: An initial filter criterion with the highest priority is taken from the unprocessed initial filter criteria as the current initial filter criterion and block 630 is executed.

In block 630, when the registration message is matched with each of the filter criteria, the Public User Identity in the registration message is replaced in turn with all corresponding Public User Identities in the subscription data, and then the registration message is compared with each of the initial filter criteria in turn. If the matching is successful, the registration message is sent to the corresponding application server (AS) to perform a third party registration.

In the above procedure, when the S-CSCF processes the third party registration, if a failure response is returned by the triggered AS, the S-CSCF makes the same processing as that of the first embodiment. When the S-CSCF receives a deregistration message, the S-CSCF makes the same processing as that of the first embodiment.

An example is as follows. A user registers by using the Public User Identity 1. After the registration is successfully authenticated by the S-CSCF, the S-CSCF downloads the subscription data as illustrated in Figure 4 from the HSS. The S-CSCF checks the initial filter criteria in the Service Profile 1 corresponding to Public User Identity 1 such that in an order from the highest to the lowest priority, the S-CSCF checks in turn whether a registration message matches with any of the initial filter criteria. If the matching is successful, the S-CSCF sends a third party registration message to each AS matched with the initial filter criteria via the ISC interface. When the checking of Service Profile 1 by the S-CSCF is finished, the checking of subscription data registered by the third party is terminated.

### The third embodiment

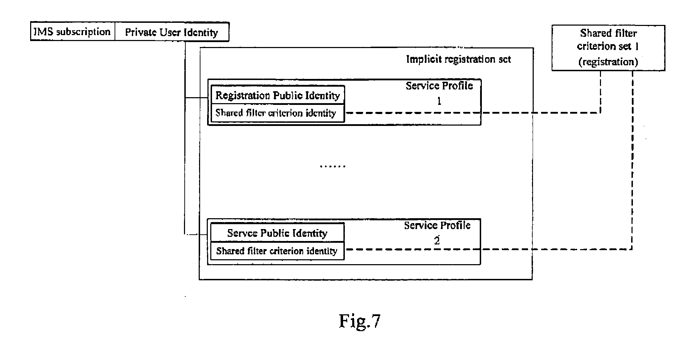

When a user having implicit registration service makes subscription, all initial filter criteria of the registration messages in an implicit registration set are collected to constitute a shared filter criterion set. According to the service processing requirement of the AS, priorities are set for the registration filter criteria. A shared filter criterion set identity is added in all the Service Profiles in the implicit registration set so that the Service Profiles can find the shared filter criterion set according to the identity. The structure of subscription data is illustrated in Figure 7.

For the purpose of being compatible to various S-CSCFs, if an S-CSCF supports the shared filter criterion set, all the downloaded Service Profiles include a reference identity for referring to the shared filter criterion set. If an S-CSCF does not support the shared filter criterion set, according to the existing policy, when the HSS processes the downloaded subscription data, the initial filter criteria in the shared filter criterion set are inserted in each of the Service Profiles and the processing can be executed according to the first or the second embodiment of the invention.

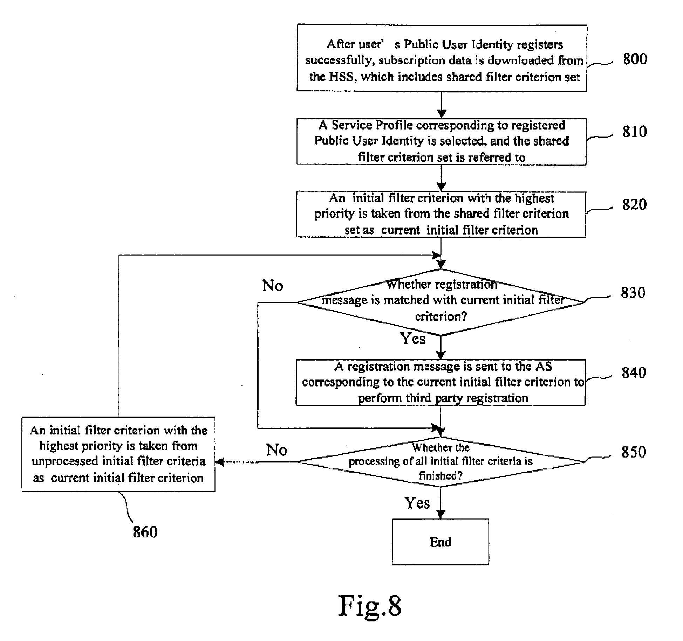

Referring to Figure 8, the initial filter criteria of the registration messages are processed by the S-CSCF according to the following blocks.

Block 800: A Public User Identity is used by a user for registration. After the registration is successfully authenticated by the S-CSCF, the S-CSCF downloads the subscription data from the HSS, and the subscription data includes a shared filter criterion set. A reference identity for referring to the shared filter criterion set is included in the Service Profile corresponding to the Public User Identity.

Block 810: The S-CSCF selects the Service Profile corresponding to the registered Public User Identity and refers to the shared filter criterion set according to the reference identity in the Service Profile.

Block 820: An initial filter criterion with the highest priority is taken from the shared filter criterion set as the current initial filter criterion.

Block 830: The registration message is matched with the current initial filter criterion and if the matching is successful, block 840 will be executed, otherwise, block 850 will be executed.

Block 840: The S-CSCF sends a registration message to the AS corresponding to the initial filter criterion via the ISC interface to perform a third party registration.

Block 850: Determine whether processing of all the initial filter criteria in the shared filter criterion set is finished. If the processing is finished, the processing procedure will be terminated, otherwise, block 860 will be executed.

Block 860: An initial filter criterion with the highest priority is taken from the unprocessed initial filter criteria as the current initial filter criterion and block 830 is executed.

In block 830, when a registration message is matched with each of the filter criteria, each of the Public User Identities in the subscription data replaces in turn the corresponding Public User Identity in the registration message, and then the registration message is compared with each of the initial filter criteria in turn. If the matching is successful, the registration message is sent to the corresponding application server (AS) to perform a third party registration.

In the above procedure, when the S-CSCF processes the third party registration, if a failure response is returned by the triggered AS, the S-CSCF makes the same processing as that of the first embodiment. When the S-CSCF receives a deregistration message, the S-CSCF makes the same processing as that of the first embodiment.

### The fourth embodiment

In the present embodiment, when the S-CSCF initiates a request of third party registration, all the Public User Identities contained in the implicit registration set are carried by the P-Associated-URI header field of the request message.

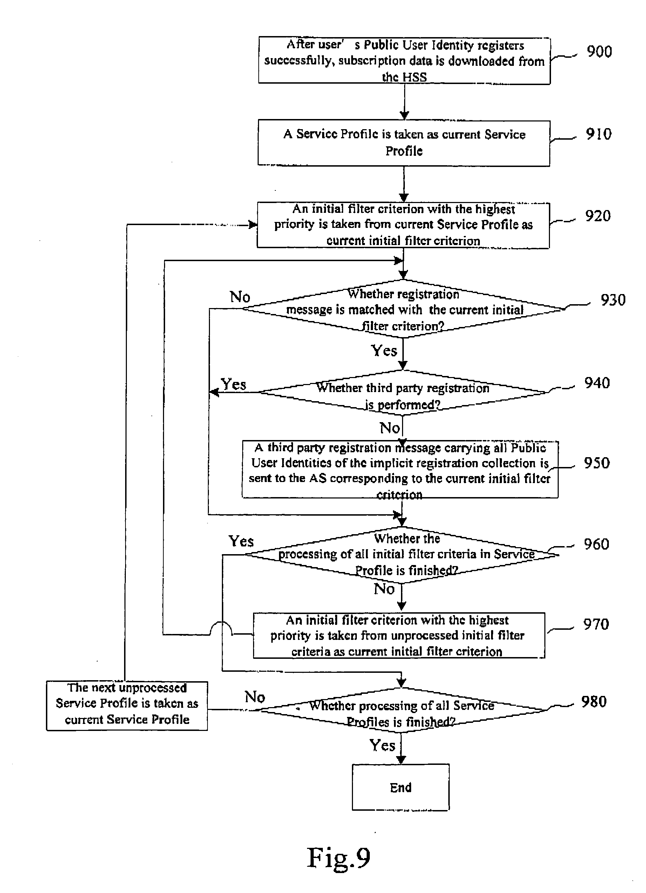

Referring to Figure 9, in the present embodiment, the procedure of processing initial filter criteria by the S-CSCF is illustrated as follows:

Block 900: A Public User Identity is used by a user for registration. After the registration is successfully authenticated by the S-CSCF, the S-CSCF downloads the subscription data from the HSS, and an implicit registration set corresponding to the user is contained in the subscription data.

For a user having implicit registration service, the implicit registration set includes all implicitly registered Public User Identities associated with the registered Public User Identity and the downloaded subscription data may contain a plurality of Service Profiles.

Block 910: One Service Profile is selected from the Service Profiles in the subscription data as the current Service Profile.

Block 920: An initial filter criterion with the highest priority is taken from the current Service Profile as the current initial filter criterion.

Block 930: The registration message is matched with the current initial filter criterion, and if the Public User Identity in the initial filter criterion is different from that in the registration message, the Public User Identity in the initial filter criterion is used to replace the Public User Identity in the registration message and then the matching is performed again. If the matching is successful, the block 940 will be executed, otherwise the block 960 will be executed.

Block 940: Determine whether the AS has been involved in a third party registration with regard to the other initial filter criteria in the same Service Profile. If the registration has been involved, the block 960 will be executed, otherwise, the block 950 will be executed.

Block 950: Using a Public User Identity matched through the registration, the S-CSCF sends the registration message to the AS corresponding to the initial filter criterion via the ISC interface to perform the third party registration. All the Public User Identities in the implicit registration set are carried in the P-Associated-URI header field of the request message.

Block 960: Determine whether processing for all the initial filter criteria in the Service Profile is finished. If the processing is finished, the block 980 will be executed, otherwise, the block 970 will be executed.

Block 970: An initial filter criterion with the highest priority is taken from the unprocessed initial filter criteria as the current initial filter criterion and block 930 is executed.

Block 980: Determine whether the processing of all Service Profiles is finished, if it is finished, the procedure will be terminated, otherwise, the next Service Profile will be taken as the current Service Profile and the block 920 will be executed.

In the above procedure, when the S-CSCF processes the third party registration, if a failure response is returned by the triggered AS, the S-CSCF makes the same processing as that of the first embodiment. When the S-CSCF receives a deregistration message, the S-CSCF makes the same processing as that of the first embodiment.

In the case that an AS need not involve a third party registration, after the S-CSCF matches a request message other than a third party registration request with the initial filter criterion and the matching is successful, all the Public User Identities in the implicit registration set can be carried in header field of the request message forwarded to the AS.

The above modes of third party registration can be combined according to requirement. Various modifications and variations can be made for the present invention by those skilled in the art if these modifications and variations fall within the scope of the appended claims

## Claims

1. A method of processing a registration message according to initial filter criteria in an IMS network, comprising:
downloading(500), by a Serving Call Session Control Function, S-CSCF, subscription data for a user from a Home Subscriber Server, HSS, after a registration of a user's Public User Identity carried in the registration message is successful, wherein the subscription data comprises an implicit registration set corresponding to the user;
wherein the implicit registration set comprising all implicitly registered Public User Identities associated with the registered Public User Identity, and when one of the Public User Identities in the implicit registration set is registered, all Public User Identities in the implicit registration set are implicitly registered; wherein each of the Public User Identities in the implicit registration set corresponds to a Service Profile;
the method **characterized by**,
traversing, by the S-CSCF, all Service Profiles corresponding to all the implicitly registered Public User Identities associated with the registered Public User Identity, matching the registration message with the initial filter criteria in all the Service Profiles corresponding to all the implicitly registered Public User Identities, and sending a request message to corresponding application servers, AS, to perform a third party registration when the matching is successful (510-570).

2. The method according to claim 1, wherein, when performing the third party registration, a registered Public User Identity in the request message is an unbarred Public User Identity in the implicit registration set or a Public User Identity selected based on a local policy.

3. The method according to claim 1, wherein, when a Service Profile comprises a plurality of Public User Identities, each of the Public User Identities in the Service Profile replaces in turn a Public User Identity in the registration message and then the registration message is matched with each of the initial filter criteria.

4. The method according to claim 1, wherein, for initial filter criteria in each Service Profile, the registration message is matched with the initial filter criteria in an order from the highest to the lowest priority.

5. The method according to claim 1, wherein, in a process of processing the third party registration, upon receiving a failure response message returned by a triggered AS, the S-CSCF stops processing subsequent initial filter criteria and initiates a network deregistration procedure.

6. The method according to claim 1, wherein, when a deregistration message initiated by a user is received by the S-CSCF, the S-CSCF traverses all the Service Profiles in the subscription data, matches the deregistration message with the initial filter criteria in all the Service Profiles, and sends a request message to corresponding application servers, AS, to perform a third party deregistration when the matching is successful.

7. The method according to claim 1, wherein, when a deregistration message from a network is received by the S-CSCF, the S-CSCF traverses all the Service Profiles in the subscription data, matches the deregistration message with the initial filter criteria in all the Service Profiles, and sends a request message to corresponding application servers, AS, to perform a third party deregistration when the matching is successful.

8. The method according to claim 1, wherein all Public User Identities in the implicit registration set are carried in the request message which is sent to corresponding application servers, AS, by the S-CSCF.

9. The method according to claim 8, wherein, all the Public User Identities in the implicit registration set are carried in the P-Associated-URI header field of the request message for a third party registration.

10. The method according to claim 8, wherein, the request message is a request message not involving a third party registration and after matching the request message with an initial filter criterion by the S-CSCF is successful, all Public User Identities in the implicit registration set are carried in the request message.

11. A method of processing a registration message according to initial filter criteria in an IMS network, comprising:
downloading(610), by a Serving Call Session Control Function, S-CSCF, subscription data for a user from a Home Subscriber Server, HSS, after a registration of a user's Public User Identity carried in the registration message is successful, wherein the subscription data comprises an implicit registration set corresponding to the user;
wherein the implicit registration set comprising all implicitly registered Public User Identities associated with the registered Public User Identity, and when one of the Public User Identities in the implicit registration set is registered, all Public User Identities in the implicit registration set are implicitly registered; wherein each of the Public User Identities in the implicit registration set corresponds to a Service Profile;
the method **characterized by**,
all initial filter criteria of the implicit registration set are inserted in each of Service Profiles in the implicit registration set;
selecting, by the S-CSCF, a Service Profile corresponding to the user's Public User Identity used in the registration message, matching the registration message with all the initial filter criteria in the selected Service Profile and sending a request message to corresponding Application Servers, AS, to perform a third party registration when the matching is successful(620-660).

12. The method according to claim 11, wherein, when performing the third party registration, a registered Public User Identity in the request message is an unbarred Public User Identity in the implicit registration set or a Public User Identity selected based on a local policy.

13. The method according to claim 11, wherein, according to service processing requirements of the AS, priorities are set for all the initial filter criteria in the Service Profile and the initial filter criteria are matched in turn by the S-CSCF based on the priorities.

14. The method according to claim 11, 12 or 13, wherein, when the registration message is matched with each of the initial filter criteria, each of Public User Identities in the implicit registration set replaces in turn the Public User Identity in the registration message, and then the registration message is matched with each of the initial filter criteria in turn, if the matching is successful, the request message is sent to the corresponding application server to perform the third party registration.

15. The method according to claim 11, wherein, in a process of processing the third party registration, upon receiving a failure response message returned by a triggered AS, the S-CSCF stops processing subsequent initial filter criteria and initiates a network deregistration procedure.

16. The method according to claim 14, wherein, when a deregistration message initiated by a user is received by the S-CSCF, the S-CSCF selects the Service Profile corresponding to the user's Public User Identity used in the deregistration message, matches the deregistration message with all the initial filter criteria in the selected Service Profile, sends the deregistration message to corresponding application servers, AS, to perform a third party deregistration when the matching is successful.

17. The method according to claim 14, wherein, when a deregistration message from a network is received by the S-CSCF, the S-CSCF selects the Service Profile corresponding to the user's Public User Identity used in the deregistration message, matches the deregistration message with all the initial filter criteria in the selected Service Profile, sends the deregistration message to corresponding application servers, AS, to perform a third party deregistration when the matching is successful.

## Patentansprüche

1. Verfahren zum Verarbeiten einer Registrierungsnachricht in Übereinstimmung mit anfänglichen Filterkriterien in einem IMS-Netz, das Folgendes umfasst:
Herunterladen (500) durch eine dienende Anrufsitzungs-Steuerfunktion, S-CSCF, von Teilnahmedaten für einen Anwender von einem Heimatteilnehmer-Server, HSS, nachdem eine Registrierung einer in der Registrierungsnachricht transportierten öffentlichen Anwenderkennung eines Anwenders erfolgreich gewesen ist, wobei die Teilnahmedaten einen dem Anwender entsprechenden impliziten Registrierungssatz enthalten;
wobei der implizite Registrierungssatz sämtliche implizit registrierten öffentlichen Anwenderkennungen, die der registrierten öffentlichen Anwenderkennung zugeordnet sind, enthält, und wobei dann, wenn eine der öffentlichen Anwenderkennungen in dem impliziten Registrierungssatz registriert wird, sämtliche öffentlichen Anwenderkennungen in dem impliziten Registrierungssatz implizit registriert werden; wobei jede der öffentlichen Anwenderkennungen in dem impliziten Registrierungssatz einem Dienstprofil entspricht;
wobei das Verfahren **gekennzeichnet ist durch**
Durchlaufen **durch** die S-CSCF aller Dienstprofile, die allen implizit registrierten öffentlichen Anwenderkennungen, die der registrierten öffentlichen Anwenderkennung zugeordnet sind, entsprechen, Anpassen der Registrierungsnachricht an die anfänglichen Filterkriterien in sämtlichen Dienstprofilen, die den sämtlichen implizit registrierten öffentlichen Anwenderkennungen entsprechen, und Senden einer Anforderungsnachricht zu entsprechenden Anwendungsservern, AS, um eine Registrierung Dritter auszuführen, wenn die Anpassung erfolgreich ist (510-570).

2. Verfahren nach Anspruch 1, wobei dann, wenn die Registrierung Dritter ausgeführt wird, eine registrierte öffentliche Anwenderkennung in der Anfordcrungsnachricht eine entriegelte öffentliche Anwenderkennung in dem impliziten Registrierungssatz oder eine öffentliche Anwenderkennung, die anhand einer lokalen Strategie ausgewählt wird, ist.

3. Verfahren nach Anspruch 1, wobei dann, wenn ein Dienstprofil mehrere öffentliche Anwenderkennungen enthält, jede der öffentlichen Anwenderkennungen in dem Dienstprofil ihrerseits eine öffentliche Anwenderkennung in der Registrierungsnachricht ersetzt und dann die Registrierungsnachricht an jedes der anfänglichen Filterkriterien angepasst wird.

4. Verfahren nach Anspruch 1, wobei für anfängliche Filterkriterien in jedem Dienstprofil die Registrierungsnachricht an die anfänglichen Filterkriterien in einer Reihenfolge von der höchsten zu der niedrigsten Priorität angepasst wird.

5. Verfahren nach Anspruch 1, wobei in einem Prozess des Verarbeitens der Registrierung Dritter bei Empfang einer fehlerhaften Antwortnachricht, die von einem ausgelösten AS zurückgeleitet wird, die S-CSCF Verarbeitung nach anfänglichen Filterkriterien anhält und eine NetzderegistrieTiingspro7,edur beginnt.

6. Verfahren nach Anspruch 1, wobei dann, wenn eine durch einen Anwender initiierte Deregistrierungsnachricht durch die S-CSCF empfangen wird, die S-CSCF sämtliche Dienstprofile in den Teilnahmedaten durchläuft, die Deregistrierungsnachricht an die anfänglichen Filterkriterien in sämtlichen Dienstprofilen anpasst und eine Anforderungsnachricht zu entsprechenden Anwendungsservern, AS, sendet, um eine Deregistrierung Dritter auszuführen, wenn die Anpassung erfolgreich ist.

7. Verfahren nach Anspruch 1, wobei dann, wenn eine Deregistrierungsnachricht von einem Netz durch die S-CSCF empfangen wird, die S-CSCF sämtliche Dienstprofile in den Teilnahmedaten durchläuft, die Deregistrierungsnachricht an die anfänglichen Filterkriterien in sämtlichen Dienstprofilen anpasst und eine Anforderungsnachricht zu entsprechenden Anwendungsservern, AS, sendet, um eine Deregistrierung Dritter auszuführen, wenn die Anpassung erfolgreich ist.

8. Verfahren nach Anspruch 1, wobei sämtliche öffentlichen Anwenderkennungen in dem impliziten Registrierungssatz in der Anforderungsnachricht, die durch die S-CSCF zu entsprechenden Anwendungsservern, AS, gesendet wird, transportiert werden.

9. Verfahren nach Anspruch 8, wobei sämtliche öffentlichen Anwenderkennungen in dem implizite Registrierungssatz in dem P-zugeordneten URI-Kopffe1d der Anforderungsnachricht für eine Registrierung Dritter transportiert werden.

10. Verfahren nach Anspruch 8, wobei die Anfordcrungsnachricht eine Anforderungsnachricht ist, die keine Registrierung Dritter involviert, und wobei, nachdem eine Anpassung der Anforderungsnachricht an ein anfängliches Filterkriterium durch die S-CSCF erfolgreich gewesen ist, sämtliche öffentlichen Anwenderkenn₁mgen in dem impliziten Registrierungssatz in der Anforderungsnachricht transportiert werden.

11. Verfahren zum Verarbeiten einer Registrierungsnachricht in Übereinstimmung mit anfänglichen Filterkriterien in einem IMS-Netz, das Folgendes umfasst:
Herunterladen (610) durch eine dienende Anrufsitzungs-Steuerfunlction, S-CSCF, von Teilnahmedaten für einen Anwender von einem Heimatteilnehmer-Server, HSS, nachdem eine Registrierung einer in der Registrierungsnachricht transportierten öffentlichen Anwenderkennung eines Anwenders erfolgreich gewesen ist, wobei die Teilnahmedaten einen dem Anwender entsprechenden impliziten Registrierungssatz enthalten;
wobei der implizite Registrierungssatz sämtliche implizit registrierten öffentliche Anwendcrkcnnilngen, die der registrierten öffentlichen Anwenderkennung zugeordnet sind, enthält, und wobei dann, wenn eine der öffentlichen Anwenderkennungen in dem impliziten Registrierungssatz registriert wird, sämtliche öffentlichen Anwenderkennungen in dem impliziten Registrierungssatz implizit registriert werden; wobei jede der öffentlichen Anwenderkennungen in dem impliziten Registrierungssatz einem Dienstprofil entspricht;
wobei das Verfahren **dadurch gekennzeichnet ist, dass** sämtliche anfänglichen Filterkriterien des impliziten Registrierungssatzes in jedes der Dienstprofile in dem impliziten Registrienmgssatz eingesetzt werden;
durch die S-CSCF ein Dienstprofil ausgewählt wird, das der öffentlichen Anwenderkennung des Anwenders entspricht, die in der Registrierungsnachricht verwendet wird, die Registrierungsnachricht an sämtliche anfänglichen Filterkriterien in dem ausgewählten Dienstprofil angepasst wird und eine Anforderungsnachricht zu entsprechenden Anwendungssezvern, AS, gesendet wird, um eine Registrierung Dritter auszuführen, wenn die Anpassung erfolgreich ist (620-660).

12. Verfahren nach Anspruch 11, wobei dann, wenn die Registrierung Dritter ausgeführt wird, eine registrierte öffentliche Anwenderkennung in der Anforderungsnachricht eine entriegelte öffentliche Anwenderkennung in dem impliziten Registrierungssatz oder eine öffentliche Anwenderkennung, die anhand einer lokalen Strategie gewählt wird, ist.

13. Verfahren nach Anspruch 11, wobei in Übereinstimmung mit Dienstverarbeittungsanforderungen des AS Prioritäten für alle anfänglichen Filterkriterien in dem Dienstprofil gesetzt werden und die anfänglichen Filterkriterien ihrerseits durch die S-CSCF anhand der Prioritäten angepasst werden.

14. Verfahren nach Anspruch 11, 12 oder 13, wobei darin, wenn die Registrierungsnachricht an jedes der anfänglichen Filterkriterien angepasst wird, jede öffentliche Anwenderkennung in dem impliziten Registrierungssatz ihrerseits die öffentliche Anwenderkennung in der Regisirierungsnachricht ersetzt und dann die Registrierungsnachricht an jede der anfänglichen Filterkriterien ihrerseits angepasst wird, wobei dann, wenn die Anpassung erfolgreich ist, die Anforderungsnachricht zu dem entsprechenden Anwendungsserver gesendet wird, um die Registrierung Dritter auszuführen.

15. Verfahren nach Anspruch 11, wobei in einem Prozess des Verarbeitens der Registrierung Dritter bei Empfang einer fehlerhaften Antwortnachricht, die von einem ausgelösten AS zurückgeleitet wird, die S-CSCF Verarbeitung nach anfänglichen Filterkriterien anhält und eine NetzderegMtrierungsprozedur beginnt.

16. Verfahren nach Anspruch 14, wobei dann, wenn eine durch einen Anwender initiierte Deregistrienmgsnachricht durch die S-CSCF empfangen wird, die S-CSCF das Dienstprofil, das der öffentlichen Anwenderkennung des Anwenders entspricht, die in der Deregisttierungsnachricht verwendet wird, auswählt, die Deregistrierungsnachricht an sämtliche der anfänglichen Filterkriterien in dem ausgewählten Dienstprofil anpasst und die Deregistrierungsnachricht zu entsprechenden Anwendungsservern, AS, sendet, um eine Deregistrierung Dritter auszuführen, wenn die Anpassung erfolgreich ist.

17. Verfahren nach Anspruch 14, wobei dann, wenn eine Deregistrierungsnachricht von einem Netz durch die S-CSCF empfangen wird, die S-CSCF das Dienstprofil, das der öffentlichen Anwenderkennung des Anwenders entspricht, die in der Deregistrierungsnachricht verwendet wird, auswählt, die Deregistrierungsnachricht an sämtliche anfänglichen Filterkriterien in dem ausgewählten Dienstprofil anpasst und die Deregistrierungsnachricht zu entsprechenden Anwendungsservern, AS, sendet, um eine Deregistrierung Dritter auszuführen, wenn die Anpassung erfolgreich ist.

## Revendications

1. Procédé de traitement d'un message d'enregistrement en fonction de critères de filtre initiaux dans un réseau IMS comprenant :
le téléchargement (500), par une Fonction de Commande de Session d'Appel de Desserte, S-CSCF, de données d'abonnement d'un utilisateur depuis un Serveur d'Abonnés de Rattachement, HSS, après un enregistrement réussi d'une Identité d'Utilisateur Publique de l'utilisateur incluse dans le message d'enregistrement, dans lequel les données d'abonnement comprennent un ensemble d'enregistrements implicites correspondant à l'utilisateur ;
dans lequel l'ensemble d'enregistrements implicites comprenant toutes les Identités d'Utilisateur Publiques enregistrées implicitement associées à l'Identité d'Utilisateur Publique enregistrée, et quand l'une des Identités d'Utilisateur Publiques dans l'ensemble d'enregistrements implicites est enregistrée, toutes les Identités d'Utilisateur Publiques dans l'ensemble d'enregistrements implicites sont enregistrées implicitement ; dans lequel chacune des Identités d'Utilisateur Publiques dans l'ensemble d'enregistrements implicites correspond à un Profil de Service ;
le procédé étant **caractérisé par**,
l'exploration, par la S-CSCF, de tous les Profils de Service correspondant à toutes les Identités d'Utilisateur Publiques enregistrées implicitement associées à l'Identités d'Utilisateur Publique enregistrée, la comparaison du message d'enregistrement aux critères de filtre initiaux dans tous les Profils de Service correspondant à toutes les Identités d'Utilisateur Publiques enregistrées implicitement, et l'envoi d'un message de requête à des Serveurs d'Application, AS, correspondants, afin d'effectuer un enregistrement tiers quand la comparaison réussit (510-570).

2. Procédé selon la revendication 1, dans lequel, durant l'exécution de l'enregistrement tiers, une Identité d'Utilisateur Publique enregistrée dans le message de requête est une Identité d'Utilisateur Publique non bloquée dans l'ensemble d'enregistrements implicites ou une Identité d'Utilisateur Publique sélectionnée en fonction d'une règle locale.

3. Procédé selon la revendication 1, dans lequel, quand un Profil de Service comprend une pluralité d'Identités d'Utilisateur Publiques, chacune des Identités d'Utilisateur Publiques dans le Profil de Service remplace une à la fois une Identité d'Utilisateur Publique dans le message d'enregistrement puis le message d'enregistrement est comparé à chacun des critères de filtre initiaux.

4. Procédé selon la revendication 1, dans lequel, pour les critères de filtre initiaux dans chaque Profil de Service, le message d'enregistrement est comparé aux critères de filtre initiaux dans un ordre allant de la plus haute priorité à la plus basse priorité.

5. Procédé selon la revendication 1, dans lequel, dans un processus de traitement de l'enregistrement tiers, à la réception d'un message de réponse d'échec renvoyé par un AS déclenché, la S-CSCF arrête le traitement des critères de filtre initiaux suivants et lance une procédure de désenregistrement du réseau.

6. Procédé selon la revendication 1, dans lequel, quand un message de désenregistrement lancé par un utilisateur est reçu par la S-CSCF, la S-CSCF explore tous les Profils de Service dans les données d'abonnement, compare le message de désenregistrement aux critères de filtre initiaux dans tous les Profils de Service, et envoie un message de requête aux Serveurs d'Application, AS, correspondants afin d'effectuer un désenregistrement tiers quand la comparaison réussit.

7. Procédé selon la revendication 1, dans lequel, quand un message de désenregistrement provenant d'un réseau est reçu par la S-CSCF, la S-CSCF explore tous les Profils de Service dans les données d'abonnement, compare le message de désenregistrement aux critères de filtre initiaux dans tous les Profils de Service, et envoie un message de requête aux Serveurs d'Application, AS, correspondants afin d'effectuer un désenregistrement tiers quand la comparaison réussit.

8. Procédé selon la revendication 1, dans lequel toutes les Identités d'Utilisateur Publiques dans l'ensemble d'enregistrements implicites sont incluses dans le message de requête qui est envoyé aux Serveurs d'Application, AS, correspondants par la S-CSCF.

9. Procédé selon la revendication 8, dans lequel toutes les Identités d'Utilisateur Publiques dans l'ensemble d'enregistrements implicites sont incluses dans le champ d'en-tête P-Associated-URI du message de requête pour un enregistrement tiers.

10. Procédé selon la revendication 8, dans lequel le message de requête est un message de requête n'impliquant pas d'enregistrement tiers et après la comparaison réussie du message de requête à un critère de filtre initial par la S-CSCF, toutes les Identités d'Utilisateur Publiques dans l'ensemble d'enregistrements implicites sont incluses dans le message de requête.

11. Procédé de traitement d'un message d'enregistrement en fonction de critères de filtre initiaux dans un réseau IMS comprenant :
le téléchargement (610), par une Fonction de Commande de Session d'Appel de Desserte, S-CSCF, de données d'abonnement d'un utilisateur depuis un Serveur d'Abonnés de Rattachement, HSS, après un enregistrement réussi d'une Identité d'Utilisateur Publique de l'utilisateur incluse dans le message d'enregistrement, dans lequel les données d'abonnement comprennent un ensemble d'enregistrements implicites correspondant à l'utilisateur ;
dans lequel l'ensemble d'enregistrements implicites comprenant toutes les Identités d'Utilisateur Publiques enregistrées associées à l'Identité d'Utilisateur Publique enregistrée, et quand l'une des Identités d'Utilisateur Publiques dans l'ensemble d'enregistrements implicites est enregistrée, toutes les Identités d'Utilisateur Publiques dans l'ensemble d'enregistrements implicites sont enregistrées implicitement ; dans lequel chacune des Identités d'Utilisateur Publiques dans l'ensemble d'enregistrements implicites correspond à un Profil de Service ;
le procédé étant **caractérisé par**,
l'insertion de tous les critères de filtre initiaux de l'ensemble d'enregistrements implicites dans chacun des Profils de Service dans l'ensemble d'enregistrements implicites ;
la sélection, par la S-CSCF, d'un Profil de Service correspondant à l'Identité d'Utilisateur Publique de l'utilisateur utilisée dans le message d'enregistrement, la comparaison du message d'enregistrement à tous les critères de filtre initiaux dans le Profil de Service sélectionné, et l'envoi d'un message de requête à des Serveurs d'Application, AS, correspondants, afin d'effectuer un enregistrement tiers quand la comparaison réussit (620-660).

12. Procédé selon la revendication 11, dans lequel, durant l'exécution de l'enregistrement tiers, une Identité d'Utilisateur Publique enregistrée dans le message de requête est une Identité d'Utilisateur Publique non bloquée dans l'ensemble d'enregistrements implicites ou une Identité d'Utilisateur Publique sélectionnée en fonction d'une règle locale.

13. Procédé selon la revendication 11, dans lequel, en fonction d'exigences de traitement de service de l'AS, des priorités sont établies pour tous les critères de filtre initiaux dans le Profil de Service et les critères de filtre initiaux sont comparés un à la fois par la S-CSCF en fonction des priorités.

14. Procédé selon la revendication 11, 12 ou 13, dans lequel, quand le message d'enregistrement est comparé à chacun des critères de filtre initiaux, chacune des Identités d'Utilisateur Publiques dans l'ensemble d'enregistrements implicites remplace une à la fois l'Identité d'Utilisateur Publique dans le message d'enregistrement, puis le message d'enregistrement est comparé à chacun des critères de filtre initiaux à la fois, si la comparaison réussit, le message de requête est envoyé au serveur d'application correspondant afin d'effectuer l'enregistrement tiers.

15. Procédé selon la revendication 11, dans lequel, dans un processus de traitement de l'enregistrement tiers, à la réception d'un message de réponse d'échec renvoyé par un AS déclenché, la S-CSCF arrête de traiter les critères de filtre initiaux suivants et lance une procédure de désenregistrement du réseau.

16. Réseau selon la revendication 14, dans lequel, quand un message de désenregistrement lancé par un utilisateur est reçu par la S-CSCF, la S-CSCF sélectionne le Profil de Service correspondant à l'Identité d'Utilisateur Publique de l'utilisateur dans le message de désenregistrement, compare le message de désenregistrement à tous les critères de filtre initiaux dans le Profil de Service sélectionné, envoie le message de désenregistrement aux Serveurs d'Application, AS, correspondants afin d'effectuer un désenregistrement tiers quand la comparaison réussit.

17. Procédé selon la revendication 14, dans lequel, quand un message de désenregistrement provenant d'un réseau est reçu par la S-CSCF, la S-CSCF sélectionne le Profil de Service correspondant à l'Identité d'Utilisateur Publique de l'utilisateur utilisée dans le message de désenregistrement, compare le message de désenregistrement à tous les critères de filtre initiaux dans le Profil de Service sélectionné, envoie le message de désenregistrement aux Serveurs d'Application, AS, correspondants afin d'effectuer un désenregistrement tiers quand la comparaison réussit.
